# FASCICULE DE BREVET EUROPEEN

(11) **EP 2 588 828 B1**
(45) Date de publication et mention de la délivrance du brevet: **08.04.2015**
(21) Numéro de dépôt: 11729093.2
(22) Date de dépôt: 21.06.2011
(51) Int. Cl.: F28F 9/02

(54) **COLLECTEUR POUR UN ECHANGEUR DE CHALEUR ET UN ECHANGEUR DE CHALEUR EQUIPE D'UN TEL COLLECTEUR**
VERTEILER FÜR EINEN WÄRMETAUSCHER UND WÄRMETAUSCHER MIT EINEM DERARTIGEN VERTEILER
HEAT EXCHANGER MANIFOLD AND A HEAT EXCHANGER EQUIPPED WITH SUCH A MANIFOLD

(30) Priorité: 30.06.2010 FR 1002779
(43) Date de publication de la demande: 08.05.2013
(73) Titulaire: Valeo Systemes Thermiques, 78320 Le Mesnil Saint Denis (FR)
(72) Inventeur: MOREAU, Laurent, F-78000 Versailles (FR); BEIDELER, François, F-51100 Reims (FR)
(86) Numéro de dépôt international: PCT/EP2011/060353
(87) Numéro de publication internationale: WO 2012/000844

(56) Documents cités:
- EP-A1- 1 780 489
- DE-A1-102006 040 848
- FR-A1- 2 791 766
- US-A1- 2007 000 639
- US-A1- 2010 038 063

## Description

La présente invention concerne un collecteur ou boîte collectrice pour un échangeur de chaleur, ainsi qu'un échangeur de chaleur équipé d'un tel collecteur.

Quoique non exclusivement, les échangeurs thermiques concernés sont destinés à équiper des véhicules et correspondent, dans une application préférentielle, aux condenseurs prévus sur les boucles ou circuits de climatisation des véhicules, ou aux radiateurs prévus sur les boucles ou circuits de refroidissement des moteurs. Cependant, d'autres applications de ces échangeurs thermiques sont également envisageables sans sortir du cadre de l'invention.

Généralement, un échangeur de chaleur pour une telle boucle thermique comprend un faisceau de tubes parallèles et deux collecteurs dans lesquels sont raccordées, de façon fixe et étanche, les extrémités correspondantes des tubes parallèles. Ainsi, le fluide, par exemple frigorigène de la boucle, peut circuler du collecteur amont tourné vers le compresseur, vers le collecteur aval tourné vers le détendeur, à travers les tubes faisant passer le fluide de la phase vapeur à la phase liquide par le flux d'air forcé externe, balayant les tubes dont la surface, augmentée par l'ajout de perturbateurs ou intercalaires dans les tubes et/ou entre les tubes, optimise l'échange thermique.

Dans le cas qui nous préoccupe ici, les échangeurs sont du type obtenu par brasage et les collecteurs utilisés alors peuvent être conçus en deux parties, et sont désignés par l'expression « collecteur ou boîte collectrice bipartite ».

Ce type de collecteur, dont la forme est globalement tubulaire, comporte :
- une plaque collectrice à paroi ouverte longitudinalement et pourvue de fentes destinées aux extrémités correspondantes des tubes parallèles de circulation du fluide ; et
- un couvercle fermant, après assemblage, l'ouverture longitudinale de la plaque collectrice et dans la paroi duquel est prévu au moins un collet extérieur délimitant un trou de circulation du fluide.

Aussi, pour assurer la liaison entre chaque collecteur et une conduite aboutissant au détendeur ou au compresseur de la boucle en question, une bride de raccordement est rapportée, de façon connue, sur le collecteur. En particulier, la bride de raccordement a un passage de fluide interne qui est amené en regard du trou du collecteur prévu à cet effet et, en général, entoure le collet extérieur du couvercle. Et la fixation de la bride est assurée par sertissage, des bords de la plaque collectrice étant rabattus sur des bords correspondants de la bride qui repose sur le couvercle. Un passage dans un four de brasage assure l'assemblage et l'étanchéité de l'échangeur, notamment entre les plaques collectrices, couvercles et brides des collecteurs et les tubes.

D'autres brides peuvent être également montées sur ces collecteurs, telles que des brides pour la fixation de l'échangeur à des parties de support du véhicule, notamment d'autres échangeurs voisins ou au chassis du véhicule.

Bien que donnant des résultats satisfaisants notamment par le collet garantissant le positionnement de la bride et son brasage par la présence de placage sur celui-ci, et le sertissage de l'ensemble, cette solution par collet présente néanmoins un inconvénient pour ce qui concerne l'efficacité de l'échangeur.

En effet, la double épaisseur de la paroi du collet prise diamétralement a tendance à réduire significativement la section de passage offerte. Cela a pour conséquence d'augmenter la perte de charges au niveau de celle-ci.

Et cela est d'autant plus critique dans le cas précité d'un échangeur du type condenseur, où la bride est sertie entre le couvercle et les bords rabattus de la plaque collectrice de chaque collecteur. De la sorte, comme le diamètre interne du collet, c'est-à-dire le diamètre du trou de circulation du fluide réfrigérant, est restreinte par la largeur du collecteur (qui n'est pas extensible compte tenu des contraintes d'espace imposées), c'est-à-dire fonction de la largeur de sertissage des deux bords rabattus l'un vers l'autre de la plaque, des deux épaisseurs de la bride délimitant le passage, et des deux épaisseurs diamétrales de la paroi du collet, issue du couvercle, la section du trou du collet est limitée.

La présente invention a pour but de remédier à cet inconvénient.
A cet effet, le collecteur pour échangeur de chaleur selon l'invention est du type apte à recevoir au moins une bride de raccordement à passage de fluide interne et comprend un couvercle fermant, après assemblage, une ouverture longitudinale d'une plaque collectrice coopérant avec ledit couvercle pour former le collecteur, notamment prévu tubulaire. Dans la paroi dudit couvercle est prévu au moins un collet extérieur délimitant un trou de circulation de fluide, ledit collecteur étant configurée pour autoriser le sertissage de ladite bride sur ledit couvercle en mettant en communication fluidique le passage interne avec le trou dudit collet. Autrement dit, ladite bride est destinée à être rapportée sur ledit couvercle.

Ladite plaque collectrice est, par exemple, pourvue de fentes destinées à des tubes parallèles de circulation fluidique.

Selon l'invention, ledit collet a une épaisseur de paroi réduite par rapport à celle dudit couvercle dont le collet est issu, de manière à maximiser la section dudit trou de circulation de fluide en direction et/ou depuis le passage interne de ladite bride.

Ainsi, en réduisant volontairement l'épaisseur de paroi au niveau du collet, on augmente la section du trou qui se rapproche de celle du passage interne de la bride, ce qui limite la dégradation en terme de pertes de charge interne.

Par exemple, la réduction d'épaisseur de la paroi du collet est au moins de 30 % par rapport à l'épaisseur de la paroi dudit couvercle. De préférence, la réduction d'épaisseur de la paroi du collet est comprise entre 50 % et 80 % par rapport à l'épaisseur de la paroi dudit couvercle.

Ainsi, avec une telle réduction d'épaisseur, l'augmentation de la perte de charge globale due à la différence des sections du trou du collet et du passage de la bride est limitée entre 5 % et 10 %. L'épaisseur du collet ainsi réduite permet néanmoins de maintenir les caractéristiques de tenue mécanique du collecteur par rapport à la bride. Réduire la paroi du collet au-delà de 80 % de l'épaisseur de la paroi restante du couvercle conduirait à fragiliser le collecteur au niveau du collet.

De préférence, le sertissage de la bride est obtenu par l'intermédiaire des bords parallèles délimitant l'ouverture longitudinale de la plaque collectrice et qui sont rabattus contre des bords correspondants prévus sur ladite bride rapportée sur ledit couvercle.

En particulier, pour obtenir une mise en place appropriée du couvercle dans la plaque collectrice, la paroi de celle-ci est munie de butées internes contre lesquelles s'appliquent les bords longitudinaux dudit couvercle après assemblage, pour fermer l'ouverture longitudinale de la plaque collectrice.

Avantageusement, la section transversale de ladite plaque collectrice est sensiblement en forme de U dans l'ouverture duquel s'engage ledit couvercle apte à recevoir ladite bride du raccordement.

Selon une autre caractéristique, la face extérieure de la paroi dudit couvercle est revêtue d'un placage destiné au brasage ultérieur dudit couvercle avec ladite plaque collectrice et ladite bride.

L'invention concerne également un échangeur de chaleur du type comprenant deux collecteurs reliés entre eux par un faisceau de tubes parallèles à circulation de fluide. Au moins l'un desdits collecteurs est tel que défini ci-dessus.

Les figures annexées feront bien comprendre comment l'invention peut être réalisée. Sur ces figures, des références identiques désignent des éléments semblables.

La figure 1 est une vue schématique en plan d'un exemple de réalisation d'un échangeur de chaleur dont les collecteurs sont munis de brides de raccordement fluidiques, conformément à l'invention.

La figure 2 est une coupe transversale partielle et agrandie selon la ligne II-II de la figure 1, passant par le trou du collet du collecteur concerné et le passage interne de la bride de raccordement fluidique associée.

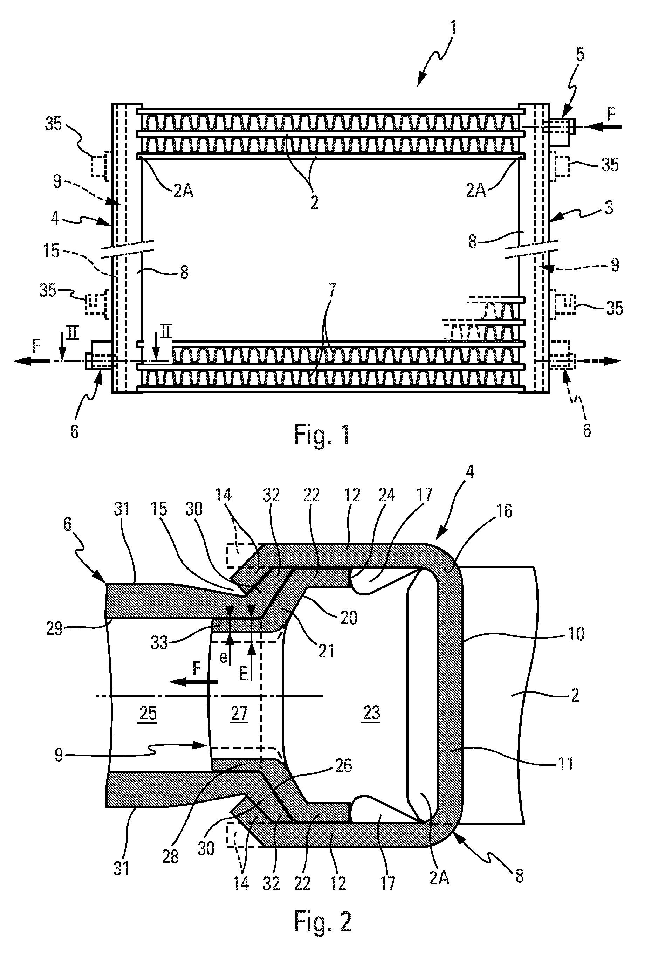

L'échangeur de chaleur 1 représenté sur la figure 1 peut être, par exemple, le condenseur ou le radiateur d'une boucle respectivement de climatisation de l'habitacle d'un véhicule ou de refroidissement du moteur de celui-ci.

Structurellement, l'échangeur 1 comprend, de façon connue, un faisceau de tubes parallèles 2 dont les extrémités 2A sont reliées, de manière fixe et étanche, à des collecteurs ou boîtes collectrices respectivement amont 3 et aval 4 selon le sens de circulation du fluide de travail F circulant dans la boucle considérée. A ces collecteurs sont respectivement rapportées des brides de raccordement fluidiques d'entrée 5 et de sortie 6, comme on le verra ultérieurement.

En particulier, les tubes 2 dans lesquels circule le fluide ont une section transversale oblongue et entre ceux-ci sont agencés des intercalaires 7 augmentant la surface d'échange thermique entre le fluide circulant dans l'échangeur 1 et le flux d'air extérieur traversant celui-ci. L'intérieur des tubes 2 peut aussi inclure des perturbateurs qui, à l'instar des intercalaires, augmentent la surface d'échange thermique et également la tenue mécanique des tubes. Il pourra aussi s'agir de tubes extrudés. Chaque tube définit, par exemple, une pluralité de canaux internes, parallèles, de circulation de fluide.

Les collecteurs amont 3 et aval 4 sont globalement identiques et ont une forme générale tubulaire. Ils sont de type « bipartite », c'est-à-dire que chacun d'eux se compose d'une plaque collectrice 8 et d'un couvercle de fermeture 9. Comme on peut le voir sur la figure 2, la plaque collectrice 8 a sensiblement une section transversale en U arrondi et sa paroi 10 définit ainsi un fond 11 prolongé de deux branches ou ailes latérales, parallèles 12 dont les bords d'extrémité 14 délimitent une ouverture longitudinale 15 obturée par le couvercle sur la figure. Dans le fond 11 de la plaque collectrice 8 sont ménagées des fentes oblongues 16 tout du long de celui-ci, dans lesquelles sont reçues les extrémités correspondantes 2A des tubes parallèles 2. On voit, sur la figure 2, que l'extrémité 2A du tube représentée traverse la fente 16 jusqu'à venir contre des butées latérales 17 faisant saillie, intérieurement au collecteur, des branches latérales 12 de la plaque collectrice en U.

Et le couvercle 9 présente, lui aussi, une section transversale sensiblement en U dont la paroi 20 forme un fond légèrement concave 21 prolongé par des branches ou ailes latérales, parallèles 22 plus courtes que celles de la plaque collectrice 8. La dimension, notamment en largeur du couvercle de fermeture, est telle que les branches latérales 22 s'ajustent tête-bêche entre les branches latérales 12 de la plaque collectrice 8. Là aussi, les bords d'extrémité 24 des branches 22 du couvercle 9 s'appliquent contre les deux butées saillantes 17 prévues à l'intérieur de la plaque collectrice 8, mais du côté opposé à celui sur lequel se trouvent les extrémités 2A des tubes 2.

L'assemblage du couvercle 9 et de la plaque collectrice 8 définit un espace interne 23 dans lequel est amené à circuler le fluide de travail de la boucle. On remarque que, dans l'exemple illustré, le fond 21 du couvercle 9 est situé, après assemblage, derrière les bords d'extrémité 14 de la plaque 8. La section transversale du collecteur 3 ou 4 est donc approximativement rectangulaire de par la forme emboîtée des U de la plaque 8 et du couvercle 9, mais pourrait être différente. Des cloisons, non représentées, sont prévues à chacune des extrémités longitudinales du collecteur pour fermer le collecteur.

La figure 2 montre la bride de raccordement fluidique dite de sortie 6 de l'échangeur 1, mais il va de soi qu'il pourrait s'agir de la bride de raccordement fluidique dite d'entrée 5 sans sortir de l'invention, les brides 5, 6 étant structurellement et fonctionnellement semblables. De même, alors que l'on a représenté les brides d'entrée 5 et de sortie 6 sur respectivement les collecteurs amont et aval, les deux brides 5, 6 notamment dans le cas de collecteurs à cloisons de séparation internes pourraient se trouver sur le même collecteur tubulaire 5 respectivement aux extrémités de celui-ci, comme le montre la bride 6 en trait pointillé sur la figure 1.

La fonction de ces brides d'entrée et de sortie est d'assurer les connexions fluidiques via des conduites non représentées entre, dans l'exemple, le compresseur de la boucle en question, tourné vers le collecteur amont 3 et l'espace intérieur du collecteur amont tubulaire 3, et entre l'espace intérieur 23 du collecteur aval tubulaire 4 et le détendeur tourné vers celui-ci, via des passages de fluide 25 ménagés dans les brides.

Pour cela, on voit que les brides présentent une forme globalement parallélépipédique dont une face 26, dans laquelle débouche le passage du fluide correspondant 25, est destiné à s'appliquer, par correspondance de forme, sur l'extérieur du fond 21 du couvercle 9 mis en communication avec un trou 27 issu d'un collet 28 du couvercle, et, ensuite, pour y être maintenue ainsi par la plaque collectrice. Le collet 28 est prévu au niveau du fond 21 du couvercle, par exemple de façon centré.

En considérant la bride de raccordement de sortie 6 montrée partiellement sur la figure 2, étant entendu qu'il en va de même pour la bride de raccordement d'entrée 5, la face d'extrémité 26 de la bride parallélépipédique 6 est présentée dans l'ouverture longitudinale 15, entre les bords 14 de la plaque collectrice 8, lesquels sont encore dans le prolongement des branches comme le montre les traits pointillés, et de manière que la paroi cylindrique 29 délimitant le passage de fluide 25 de la bride 6 s'engage autour du collet cylindrique 28 issu perpendiculairement du fond 21 du couvercle. Cela assure ainsi le centrage et le bon positionnement de la bride 6 sur le couvercle 9. On remarque que les bords latéraux et parallèles 30 de la face de contact 26 de la bride épousent au mieux la forme du fond concave 21 du couvercle de manière, là aussi, à s'ajuster entre les branches parallèles 12 de la plaque collectrice 8 en U. Et ces bords latéraux et parallèles 30 forment, par rapport aux grandes faces transversales et parallèles 31 dont ils sont issus, des becs saillants 32 vers l'extérieur tout du long de la bride 6, lesquels vont permettre le sertissage de celle-ci sur le collecteur tubulaire 4 par le rabattement des bords d'extrémité 14 des branches parallèles et latérales 12 de la plaque collectrice 8 sur les bords d'extrémité 30 en forme de becs saillants 32 de la bride. Ainsi, celle-ci se trouve immobilisée entre le fond 21 du couvercle 9 et les bords rabattus 14 de la plaque collectrice 8, le trou 27 du collet 28 et le passage interne 25 de la bride 6 étant alors coaxiaux.

Pour réduire au mieux la perte de charge engendrée par le changement des sections transversales entre celle du trou 27 du collet et celle du passage 25 de la bride, l'épaisseur e de la paroi 33 du collet issu du couvercle est amincie par rapport à l'épaisseur E de la paroi 20 restante du couvercle, c'est-à-dire son fond et ses branches latérales, parallèles. L'amincissement de paroi est obtenu par toute opération mécanique appropriée (étirage, emboutissage, etc...).

Ainsi, on voit, sur la figure 2, que la réduction d'épaisseur de la paroi 33 du collet 28 est de l'ordre de 50 % bien qu'elle pourrait atteindre 70%, voir 80 % sans risque de fragiliser la liaison obtenue. On a représenté par des traits pointillés l'épaisseur E du collet avant amincissement (correspondant à la paroi 20), de sorte que la section transversale du trou 27 s'en trouve optimiser permettant une circulation du fluide (flèche F) provenant de l'espace 23 à travers la bride 6 avec une perte de charge moindre, améliorant au final l'efficacité de la boucle.

Des résultats ont montré que l'augmentation de la perte de charge interne globale sans réduction de l'épaisseur de paroi du collet est comprise entre 20 et 30 %, ce qui est particulièrement pénalisant.

En revanche, grâce à l'invention, rapprochant au mieux le diamètre du trou 27 du collet, du diamètre du passage interne 25 de la bride, par une réduction de l'épaisseur de paroi du collet, l'augmentation de la perte de charge interne globale est limitée entre 5 et 10 %, ce qui est acceptable.

L'étanchéité entre la bride 6 et le couvercle 9 est garantie par un revêtement de placage, non représenté, déposé autour de l'extérieur de la paroi du collet et solidarisant ce dernier à la bride par brasage, tandis que d'autres revêtements de placage sont prévus entre les branches en regard de la plaque collectrice et du couvercle, et entre les extrémités des tubes et les fentes oblongues.

Pour information, on a représenté, sur la figure 1 par la référence 35, d'autres brides rapportées ainsi par sertissage sur les collecteurs tubulaires 3, 4 et destinées à la fixation de l'échangeur 1 sur des supports appropriés du véhicule et à l'accrochage d'une bouteille de stockage de fluide en communication de fluide avec l'un des collecteurs.

## Revendications

1. Collecteur pour échangeur de chaleur comprenant au moins une bride (5, 6) de raccordement à passage de fluide interne (25), et comprenant un couvercle (9) fermant, après assemblage, une ouverture longitudinale d'une plaque collectrice coopérant avec ledit couvercle pour former ledit collecteur et dans la paroi duquel est prévu au moins un collet extérieur (28) délimitant un trou de circulation de fluide (27), ledit collecteur étant configurée pour autoriser le sertissage de ladite bride (5, 6) sur le couvercle (9) en mettant en communication fluidique le passage interne (25) avec le trou (27) dudit collet, ledit collet (28) ayant une épaisseur de paroi (33) réduite par rapport à celle dudit couvercle (9) dont le collet est issu, de manière à maximiser la section dudit trou de circulation de fluide (27),
la plaque collectrice (8) étant formée d'une paroi (10) définissant un fond (11) prolongé de deux branches parallèles (12) comportant des bords d'extrémité (14), **caractérisé en ce que** la section transversale de ladite plaque collectrice (8) étant sensiblement en forme de U dans l'ouverture duquel s'engage ledit couvercle (9) recevant ladite bride de raccordement (5, 6) et **en ce que** le sertissage de la bride (5, 6) est obtenu par l'intermédiaire des bords d'extrémité parallèles (14) délimitant l'ouverture longitudinale de la plaque collectrice (8) et qui sont rabattus contre des bords correspondants (30) prévus sur ladite bride (5, 6) rapportée sur ledit couvercle.

2. Collecteur selon la revendication 1, dans lequel la réduction d'épaisseur de la paroi (33) du collet (28) est au moins de 30 % par rapport à l'épaisseur de la paroi (20) dudit couvercle (9).

3. Collecteur selon l'une des revendications 1 ou 2, dans lequel la réduction d'épaisseur de la paroi (33) du collet (28) est comprise entre 50 % et 80 % par rapport à l'épaisseur de la paroi (20) dudit couvercle (9).

4. Collecteur selon l'une des revendications précédentes 1 à 3, dans lequel sont ménagées, dans la paroi (10) de la plaque collectrice (8), des butées internes (17) contre lesquelles s'appliquent les bords longitudinaux (24) dudit couvercle après assemblage, pour fermer l'ouverture longitudinale de la plaque collectrice (8).

5. Collecteur selon l'une des revendications précédentes 1 à 4, dans lequel la face extérieure (26) de la paroi dudit couvercle (9) est revêtue d'un placage destiné au brasage ultérieur dudit couvercle avec ladite plaque collectrice et ladite bride.

6. Echangeur de chaleur du type comprenant deux collecteurs (3, 4) reliés entre eux par un faisceau de tubes parallèles (2) à circulation de fluide, **caractérisé en ce qu'**au moins l'un desdits collecteurs (3, 4) est tel que défini selon l'une quelconque des revendications précédentes.

## Patentansprüche

1. Verteiler für Wärmetauscher, der mindestens einen Anschlussflansch (5, 6) mit innerem Fluiddurchfluss (25), eine Verteilerplatte (8) und eine Abdeckung (9) aufweist, die nach dem Zusammenbau eine Längsöffnung der Verteilerplatte (8) schließt, die mit der Abdeckung (9) zusammenwirkt, um den Verteiler zu bilden und in deren Wand mindestens ein Außenbund (28) vorgesehen ist, der ein Loch für den Umlauf von Fluid (27) abgrenzt, wobei der Verteiler ausgestaltet ist, um das Fassen des Flansches (5, 6) auf der Abdeckung (9) zuzulassen, indem der innere Durchgang (25) mit dem Loch (27) des Bundes in Fluidverbindung gebracht wird, wobei der Bund (28) eine Wanddicke (33) aufweist, die im Verhältnis zu derjenigen der Abdeckung (9), von der der Bund stammt, derart verringert ist, dass der Querschnitt des Lochs für den Umlauf von Fluid (27) maximiert wird,
wobei die Verteilerplatte (8) aus einer Wand (10) gebildet ist, die einen Boden (11) definiert, der durch zwei parallele Schenkel (12) verlängert ist, die Endränder (14) aufweisen, **dadurch gekennzeichnet, dass** der Querschnitt der Verteilerplatte (8) im Wesentlichen die Form eines U aufweist, in dessen Öffnung die Abdeckung (9) eingreift, die den Anschlussflansch (5, 6) aufnimmt, und dadurch, dass das Fassen des Flansches (5, 6) mittels der parallelen Endränder (14) erhalten wird, die die Längsöffnung der Verteilerplatte (8) abgrenzen und die gegen entsprechende Ränder (30) umgeschlagen sind, die auf dem Flansch (5, 6) vorgesehen sind, der auf der Abdeckung angesetzt ist.

2. Verteiler nach Anspruch 1, wobei die Verringerung der Dicke der Wand (33) des Bundes (28) mindestens 30 % im Verhältnis zur Dicke der Wand (20) der Abdeckung (9) beträgt.

3. Verteiler nach einem der Ansprüche 1 oder 2, wobei die Verringerung der Dicke der Wand (33) des Bundes (28) zwischen 50 % und 80 % im Verhältnis zur Dicke der Wand (20) der Abdeckung (9) enthalten ist.

4. Verteiler nach einem der Ansprüche 1 bis 3, wobei in der Wand (10) der Verteilerplatte (8) innere Anschläge (17) eingerichtet sind, gegen die die Längsränder (24) der Abdeckung nach dem Zusammenbau anliegen, um die Längsöffnung der Verteilerplatte (8) zu schließen.

5. Verteiler nach einem der vorhergehenden Ansprüche 1 bis 4, wobei die Außenfläche (26) der Wand der Abdeckung (9) mit einer Plattierung beschichtet ist, die zum späteren Löten der Abdeckung mit der Verteilerplatte und dem Flansch bestimmt ist.

6. Wärmetauscher des Typs, der zwei Verteiler (3, 4) aufweist, die durch ein Bündel paralleler Rohre (2) mit Fluidumlauf miteinander verbunden sind, **dadurch gekennzeichnet, dass** mindestens einer der Verteiler (3, 4) nach einem der vorhergehenden Ansprüche ist.

## Claims

1. Header for a heat exchanger, comprising at least one connecting flange (5, 6) with an internal fluid passage (25), a header plate (8) and a cover (9) which, after assembly, closes a longitudinal opening of said header plate (8) which interacts with said cover (9) to form said header, the wall of said cover having at least one external collar (28) delimiting a hole (27) for the flow of fluid, said header being configured to allow said flange (5, 6) to be crimped onto the cover (9), thereby bringing the internal passage (25) into fluid communication with the hole (27) in said collar, said collar (28) having a wall thickness (33) smaller than that of said cover (9) from which the collar extends, thereby maximizing the cross section of said hole (27) for the flow of fluid, the header plate consisting of a wall (10) defining a base (11) extended by two parallel branches (12) comprising terminal edges (14), **characterized in that** the cross section of said header plate (8) is substantially U-shaped, its opening being engaged by said cover (9) receiving said connecting flange (5, 6), and **characterized in that** the flange (5, 6) is crimped by using the parallel terminal edges (14) delimiting the longitudinal opening of the header plate (8), which are bent onto corresponding edges (30) provided on said flange (5, 6) attached to said cover.

2. Header according to Claim 1, wherein the reduction of thickness of the wall (33) of the collar (28) is at least 30% relative to the thickness of the wall (20) of said cover (9).

3. Header according to either of Claims 1 and 2, wherein the reduction of thickness of the wall (33) of the collar (28) is between 50% and 80% relative to the thickness of the wall (20) of said cover (9).

4. Header according to any of the preceding Claims 1 to 3, wherein the wall (10) of the header plate (8) is provided with internal stops (17), against which the longitudinal edges (24) of said cover bear after assembly in order to seal the longitudinal opening of the header plate (8).

5. Header according to any of the preceding Claims 1 to 4, wherein the outer face (26) of the wall of said cover (9) is provided with a coating for use in the subsequent brazing of said cover with said header plate and said flange.

6. Heat exchanger of the type comprising two headers (3, 4) interconnected by a bundle of parallel fluid flow tubes (2), **characterized in that** at least one of said headers (3, 4) is as defined in any of the preceding claims.
